# EUROPEAN PATENT SPECIFICATION

(11) **EP 3 293 392 B1**
(45) Date of publication and mention of the grant of the patent: **12.08.2020**
(21) Application number: 17189947.9
(22) Date of filing: 07.09.2017
(51) Int. Cl.: F03D 1/06, F03D 80/30

(54) **WIND TURBINE BLADE COMPRISING AN EDGEWISE STABILIZER**
WINDTURBINENSCHAUFEL MIT EINEM KANTENSTABILISATOR
PALE D'ÉOLIENNE COMPRENANT UN STABILISATEUR LATÉRAL

(30) Priority: 08.09.2016 DK 201670690
(43) Date of publication of application: 14.03.2018
(73) Proprietor: VESTAS WIND SYSTEMS A/S, 8200 Aarhus N (DK)
(72) Inventor: NIELSEN, Thomas S. Bjertrup, 8940 Randers (DK)
(74) Representative: Vestas Patents Department

(56) References cited:
- CN-A- 103 016 276
- CN-U- 202 176 459
- JP-A- H05 180 146
- US-A- 4 180 372
- US-A1- 2010 068 058
- US-A1- 2010 135 806

## Description

### TECHNICAL FIELD

The present disclosure relates to a wind turbine equipped with an edgewise stabilizer that is operable to address edgewise blade vibrations in certain operating conditions.

### BACKGROUND

Horizontal Axis Wind Turbines (HAWT) are being designed with ever larger rotor diameters as manufacturers look to capture more and more energy from the wind. Longer wind turbine blades tend to be more susceptible to dynamic loading, which can increase the rate of fatigue of such blades.

One mode of dynamic loading that occurs within wind turbines is caused by edgewise vibrations of the blades. Edgewise vibration is a form of dynamic loading that occurs due to excitation of a blade along its edgewise axis. The damaging effect of edgewise vibration is often experienced in high wind speeds whilst the wind turbines are idling in a non-operating mode.

During non-operating modes the blades of the turbine are pitched out of the wind in order to minimise the force applied to the blades by the incident wind. Variations in the wind direction can introduce errors in both the yaw and azimuth angles of the rotor which results in a large interval of potential angles of attack (also known as angle of incidence). At certain angles of attack the rotor blades can experience negative aerodynamic damping which can give rise to instability within the blades and potentially large dynamic responses, known as edgewise vibrations. The magnitude of the dynamic loads applied to the blades increases with wind speed and can also be increased if the rotor is locked.

Reducing the effect of edgewise vibrations has been a growing area of research in recent years as wind turbine manufacturers explore ways to tackle the engineering challenges inherent in larger wind turbines. Manufacturers have previously tried to reduce the effects of edgewise vibrations by placing dampers, such as liquid or roller dampers, within the turbine blades, although this was challenging to realise due to the lack of space within turbine blades.

It is against this background that the embodiments of the invention have been devised.

US2010/0068058 describes a wind turbine where an outermost part of the blade can be turned at an angle to control the size of the rotor area and the distance between the blade tip and the wind turbine tower.

### SUMMARY OF THE INVENTION

According to the present invention there is provided a wind turbine comprising: at least one pitchable wind turbine blade mounted to a hub, the blade having a root end, a tip end and a longitudinal axis extending between the root end and the tip end, and an aerofoil surface defined by a pressure side and a suction side; and a movable fin mounted at the tip end of the blade, wherein the fin is deployed into a first position in dependence on the pitch position of the blade and when the wind turbine is in a non-operational mode; wherein in the first position the fin extends in a direction substantially aligned with the longitudinal axis of the blade and is arranged in a plane which is substantially perpendicular to an edgewise axis of the blade at the tip end, such that the fin acts as an aerodynamic stabilizer to reduce the effects of edgewise vibrations on the blade.

Wind turbines generate power between a lower cut-in wind speed (typically around 3 to 4 m/s) and an upper cut-out wind speed (typically around 25 m/s). Between the cut-in wind speed and the cut-out wind speed when the turbine is generating power the wind turbine is in an "operational mode". When the wind turbine is not generating power the turbine is in the "non-operational mode".

The wind turbine may be in the non-operational mode when there are strong winds (i.e. above the cut-out wind speed), when it is undergoing maintenance, or when it is disconnected from the electricity distribution system or grid.

Preferably, in the non-operational mode the blades will be pitched so that they are feathered into the wind. However, if the turbine is not connected to the electrical grid it may not be possible to adjust the pitch angle of the blades if the wind direction changes.

A method of operating a wind turbine may include at least one pitchable wind turbine blade mounted to a hub, the blade having a root end, a tip end and a longitudinal axis extending between the root end and the tip end, and an aerofoil surface defined by a pressure side and a suction side; and wherein the blade is provided with a movable fin mounted at the tip end thereof, and wherein the method comprises: configuring the wind turbine into a non-operational mode, and deploying the fin into a first position, in dependence on blade pitch position, in which it act as an aerodynamic stabilizer to reduce the effects of edgewise vibrations on the blade

The edgewise stabilizer of the invention can be retrofitted to an existing blade or designed into a blade during manufacture. In either case, the edgewise stabilizer helps to reduce the edgewise oscillations of the blade when the wind turbine is not operating as it acts as an aerodynamic brake.

The fin may also be movable to a second position in which it acts as a winglet. In this way, the fin improves the aerodynamic characteristics of the blade when the rotor of the wind turbine is rotating. When acting as a winglet, the fin may extend in a direction transverse to the longitudinal axis of the blade, and in some embodiments perpendicular to the longitudinal axis. When the fin is in the second position the wind turbine is in an operational mode, that is the wind turbine is generating power.

The fin may be moved between the first position and the second position depending on the blade pitch position. For example, during operation of the wind turbine when the rotor is turning the fine may be folded back to acts as a winglet, thereby providing aerodynamic lift benefits to the blade. However, in circumstances where the wind turbine is shutdown, during which the blades are pitched into a feathered position, the fin may then be deployed into the first position thereby to act as an aerodynamic stabilizer and brake. In one embodiment the fin extends in a direction aligned with the longitudinal axis of the blade when it is in the first position, although it will be appreciated that the stabilizing benefits of the fin will also be achieved even if the fin is not extending precisely in line with the longitudinal axis of the blade.

The edgewise axis extends in a direction between a leading edge and a trailing edge of the blade. It will be appreciated that a wind turbine blade may be twisted or bent, so the direction of the edgewise axis can change long the spanwise length of the blade between the root and the tip.

The fin may be moved between its first and second positions by various means. In one embodiment, the fin is configured to be moved to the first position by an electric motor, the operation of which is linked to a pitch system of the wind turbine. Alternatively, the fin may be configured to be moved to the first position by a cable operable by a component associated with a pitch system of the wind turbine. This variant may be less complex since it is a simple mechanical solution with no requirement for a powered motor.

A variety of blade pitch positions may cause the fin to deploy into its stabilizing position. In one embodiment, the fin may be moved to the first position when the pitch position of the blade is greater than about 40°. However, when the fin is not being moved to the first position it may be configured to pivot freely with respect to the blade.

In some embodiments, the fin may be useful as part of a lightning protection system of the blade. In such a case the fin would be made at least in part of a conductive material and electrically coupled to the lightning protection system. Although the fin could be a solid metallic component, it is envisaged that a metallic coating over a polymeric body would also function acceptably.

To ensure that the use of the fin does not introduce operational noise, the fin may include a turbulence reducing feature.

The fin may extend over one or both of the suction and pressure sides of the blade so as to increase the stabilizing effects of it compared to a fin simply extending from the blade tip. Where a part of the fin extends over the surface of the blade, a gap may be defined between the fin and the blade to allow the fin to move between its two positions. A flexible skirt may fill at least part of the gap to guard against airflow passing through the gap.

Preferably, the fin has a length between 2% to 8% of a length of the blade and the fin has a width between 0.5% to 3% of a length of the blade.

### BRIEF DESCRIPTION OF THE DRAWINGS

The invention will now be described in detail, by way of example only, with reference to the accompanying drawings, in which:
Figure 1 illustrates a wind turbine comprising blades equipped with respective edgewise stabilizers in accordance with an embodiment of the invention;
Figure 2a is a perspective view of a wind turbine blade of the wind turbine in Figure 1, whilst Figure 2b illustrates a chord-wise section of the blade and demonstrates pitch angle measurement convention;
Figure 3 is a planform view of the wind turbine blade in in Figure 2, and which shows the edgewise stabilizer in two alternative positions;
Figure 4 is a side view of the wind turbine blade of Figure 2;
Figure 5 is a view of a section through the wind turbine blade in Figure 3 along the line marked 'A';
Figure 6 is a section view of a wind turbine blade, like that in Figure 5, but which shows an alternative embodiment of edgewise stabilizer;
Figure 7 is a schematic view of the wind turbine blade of Figure 1 which illustrates one example of a mechanism for operating the edgewise stabilizer; and
Figure 8 includes comparative planform views of two wind turbine blades which illustrates an advantage of the edgewise stabilizer.

### DETAILED DESCRIPTION

Specific embodiments of the invention will now be described in which numerous features will be discussed in detail in order to provide a thorough understanding of the inventive concept as defined in the claims. However, it will be apparent to the skilled person that the invention may be put in to effect without the specific details and that in some instances, well known methods, techniques and structures have not been described in detail in order not to obscure the invention unnecessarily.

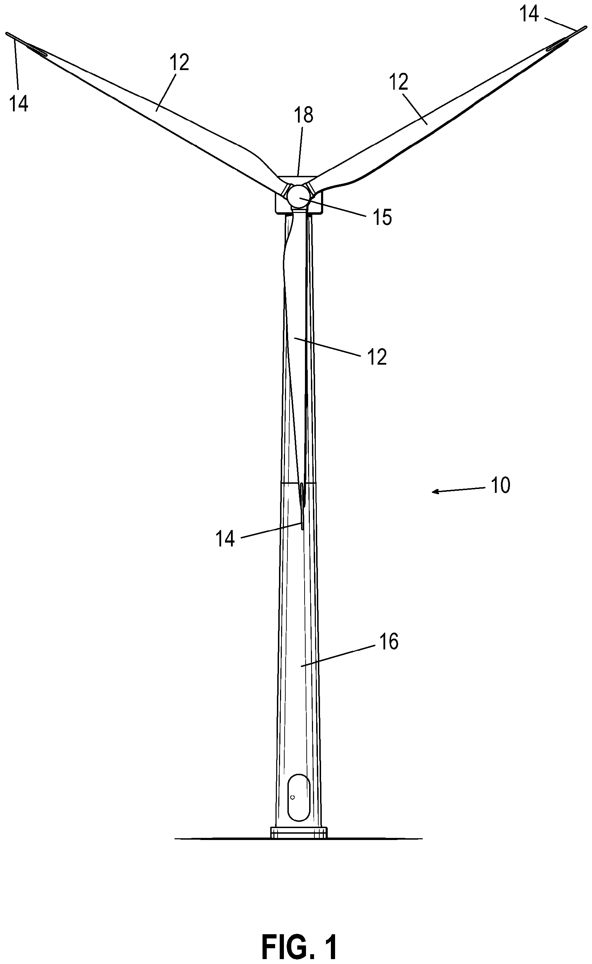

In order to place the embodiments of the invention in a suitable context, reference will firstly be made to Figure 1. In Figure 1, a wind turbine 10 according to one embodiment of the invention includes a rotor having wind turbine blades 12 each comprising a deployable edgewise stabilizer 14. The deployable edgewise stabilizers 14 provides a means of damping and thus reducing the effects of edgewise vibrations on the blades 12.

In more detail, the wind turbine 10 illustrated in Figure 1 is an onshore wind turbine, although the invention may equally be applied to an offshore wind turbine. The wind turbine 10 comprises a tower 16, a nacelle 18 rotatably coupled to the top of the tower 16 by a yaw system (not shown), a rotating hub 15 mounted to the nacelle 18, a blade pitch system (not shown) that may be mounted within the rotating hub 15 so as to control the pitch of the wind turbine blades 12.

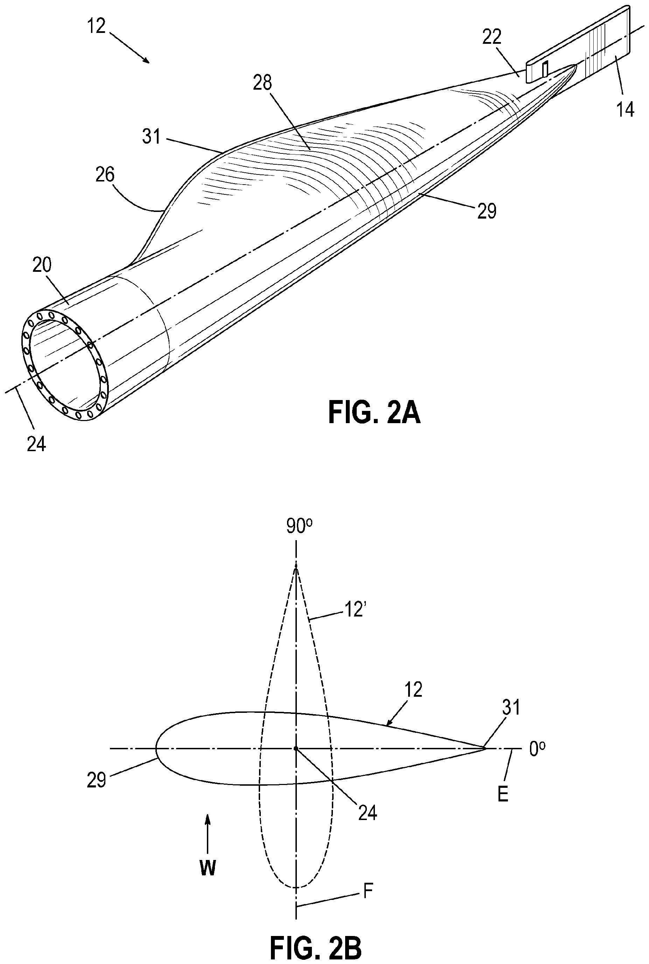

Figure 2a (not to scale) shows one of the blades 12 in more detail, which includes a root end 20, a tip end 22, and a longitudinal axis 24 extending from the root end 20 to the tip end 22 of the blade 12. The blade 12 defines an aerofoil profile comprising a pressure side 26 and a suction side 28 extending between leading and trailing edges 29,31. A chord is defined between the leading edge and the trailing edge. An edgewise axis also extends in a direction between the leading edge and the trailing edge. A span is defined between the root of the blade and the tip of the blade.

The wind turbine 10 is typically set into a non-operational mode during strong wind conditions or when undergoing maintenance. In such conditions for an upwind wind turbine, the rotor is yawed into the wind (i.e. so that the wind is aligned with the rotational axis of the rotor) and the blades 12 are pitched to be feathered into the wind (so that the blades are pitched to have an angle of attack where they do not generate lift), in order to reduce the load applied to the blades 12. However, due to variations in the wind direction unwanted loads are still applied to the blades 12 which can cause the blades to oscillate unacceptably.

Excitement of a blade due to air flow around it can cause the blade to oscillate in various oscillatory modes. Referring to Figure 2b, blade oscillations may occur along the length of the blade in the edgewise direction, which is one of two main directions in which the blade principally oscillates. The other main direction of oscillation is in a "flapwise" direction. In use a blade will be excited with a combination of these oscillation modes. Oscillations in the edgewise direction cause the blade 12 to move relative to edgewise axis E which extends generally through the leading and trailing edges 29,31 of the blade 12. The edgewise axis E is therefore substantially perpendicular to the longitudinal axis 24 of the blade 12. Similarly, oscillations in the flapwise direction cause the blade to move relative to flapwise axis F which extends through the upper and lower surfaces of the blade 12 and which is substantially perpendicular to both the longitudinal axis 24 and the edgewise axis E of the blade 12.

Flapwise oscillation is often easily monitored and damped, whereas management of edgewise oscillation is more difficult. This is because the aerodynamic surface area along the pressure and suction sides 26, 28 tends to damp oscillations in the flapwise direction, whereas there is less aerodynamic damping of the blade when the oscillations are mostly in the edgewise direction. Indeed, in some configurations, aerodynamic damping can become negative such that the edgewise oscillations tend to increase under certain wind conditions. Furthermore, direct action cannot easily be taken to reduce edgewise vibration in the same way that can be implemented when unacceptable flapwise vibration is measured.

In the invention, the edgewise stabilizer functions to reduce the edgewise oscillations during certain operating conditions of the wind turbine, as will now be described in more detail.

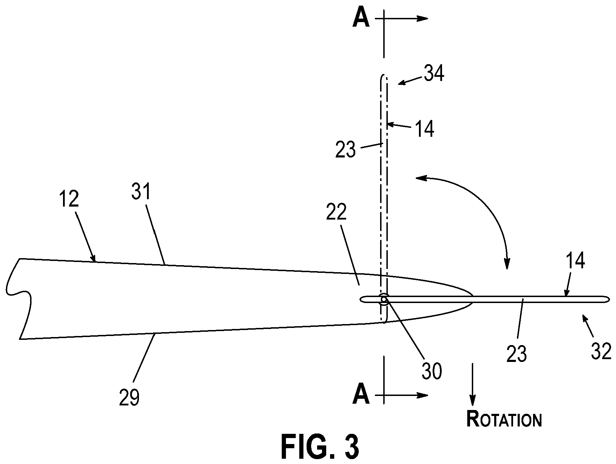

With reference also to Figure 3 which is a planform view of the wind turbine blade, the edgewise stabilizer 14 is mounted towards the tip end 22 of the blade 12. In this embodiment, the edgewise stabilizer 14 comprises a fin 23 that is elongate and plate-like in form and which is pivotably mounted at the tip end 22 of the blade 12 on an axle arrangement 30. In the illustrated embodiment, the axle arrangement 30 is positioned a small distance back from the very tip of the blade, although other embodiments may comprise an axle arrangement at the very tip of the blade, as will become apparent. The axle arrangement 30 defines an axis extending generally perpendicularly to the longitudinal axis 24 of the blade 12, and parallel to the flapwise axis F. The axle arrangement 30 may include suitable bearings, which may be plain or roller bearings, for example, to ensure that the fin 23 can rotate freely with the axle arrangement 30. It will be appreciated that this configuration of mounting the fin 23 so that it can pivot relative to the blade is one example, and the skilled person would understand that other configurations would be possible.

The edgewise stabilizer 14 is able to move between a first position 32 and a second position 34. In one embodiment of the invention the edgewise stabilizer 14 is moved between the first 32 and second 34 positions in dependence on the pitch angle of the blade which, in turn, depends on the operational mode of the wind turbine. Figure 2b illustrates a chord-wise section through the wind turbine blade 12 relative to a pitch angle range between 0 degrees and 90 degrees. As shown, the blade 12 is oriented such that its edgewise axis E is oriented normal to the incident wind, W, and this represents a 0 degree pitch angle. In contrast, the blade marked as 12' is oriented such that its edgewise axis E is aligned, or parallel, with the incident wind W. This represents a 90 degree or 'feathered' pitch position and may be accompanied by a corresponding yaw of the nacelle. During an operational mode, the blades are generally set at a pitch angle between 0 degrees and 30 degrees. However, in a non-operational mode, the blades are pitched to angles greater than about 70 degrees, and preferably to about 90 degrees.

In overview, in the embodiments of the invention the edgewise stabilizer 14 is moved into the first position 32 when the wind turbine 10 is in a non-operational mode. When in the first position 32 the edgewise stabilizer 14 is orientated in a manner substantially parallel or aligned with the longitudinal axis 24 of the blade 12. Conversely, the edgewise stabilizer 14 is positioned in the second position 34 when the wind turbine 10 is in an operational mode in which position the edgewise stabilizer 14 acts as a winglet of the blade 12. When in the second position 34 the edgewise stabilizer 14 is orientated transversely to the longitudinal axis 24 of the blade 12. In other words, in the second position 34, the edgewise stabilizer 14 is aligned with the direction of rotation of the blade 12. Beneficially, in this position, the edgewise stabilizer 14 acting as a winglet reduces tip losses within the blade 12 and improves its overall efficiency.

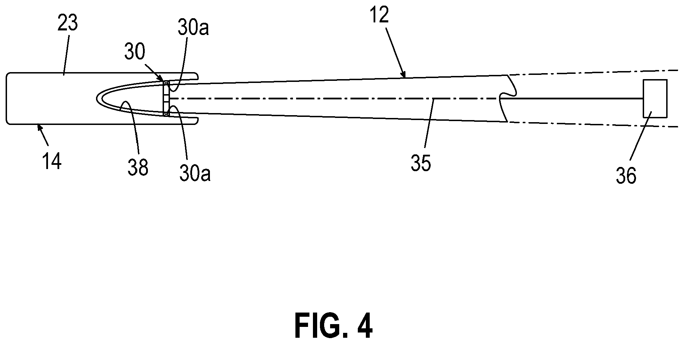

Having discussed the general functionality of the edgewise stabilizer 14, its structure will now be described in more detail. Figure 4 illustrates the edgewise stabilizer 14 in the first position 32 in which it extends generally in alignment with the longitudinal axis 24 of the blade 12.

As has been mentioned, the fin 23 in this embodiment is planar or plate-like in form defining an oblong shape, such that its long sides are generally parallel to the axis of the blade 12. The dimensions of the fin 23 are selected in accordance with the blade length to ensure that sufficient surface area is provided to optimise edgewise damping during non-operation of the wind turbine. It is currently envisaged that for a blade of approximately 80 metres in length, the fin would need to be approximately 4 metres long and 1 metre wide, although these dimensions should be considered as an example only. More generally, it is envisaged that lengths of between 1 and 4 metres and widths between 0.4 and 1.5 metres would be suitable for most applications. Expressed another way, in this embodiment the fin has a length approximately 5% of the blade length, although it is considered that a range of lengths between 2-8%, and particularly between 4-6%, of the blade length would also be acceptable. In terms of width, in this embodiment the fin has a width that is approximately 1.25% of the blade length although, more generally, it is considered that widths between 0.5-3%, and more particularly between 1-2%, of the blade length may be acceptable.

In terms of thickness, the main consideration is that the thickness should be selected so that the fin 23 is strong enough not to buckle or otherwise deform during use. A strengthening structure such as ribs or a honeycomb formation may also be provided to increase rigidity whilst reducing weight, although it should be noted that this detail is not shown in the figures. Currently, it is envisaged that a fin thickness between 2mm and 10mm would be acceptable. For relatively thick fins, suitable tapering towards its edge is desirable to ensure that the thickness of the fin at its edge is comparable to the thickness of the blade at the trailing edge of the blade, for example around 2mm.

In its simplest form, the fin 23 may be comprised of any suitable material, although preferably such material should be rigid so that it can withstand the bending forces to which it is subjected during use, yet lightweight so as to minimise the loading added to the associated blade. One option could be a suitable polymer or composite such as polycarbonate or glass/carbon-reinforced plastic, by way of example. Embodiments are also envisaged in which the fin 23 is conductive. For example it may be constructed of solid metal or have a conductive outer surface or skin, for example a metallic mesh overlaid on a non-conductive core. In such embodiments, the edgewise stabilizer 14 would therefore be able to attract lightning strikes and so form part of the lightning protection system of the blade 12. In other words, the edgewise stabilizer 14 functions as a tip receptor for the blade 12. This is illustrated in Figure 4 in which a down conductor 35 is connected to the axle arrangement 30 and extends down the inside of the blade 12 where it is coupled to a lightning protection system 36. It should be noted that the lightning protection system 36 is shown here schematically as its functionality would be understood well by a skilled person. Bearings 30a at either end of the axle arrangement 30 that permit the fin 23 to pivot may suitably be insulated to ensure that they are not damaged by the passage of current through the metallic structure of the fin 23, the axle arrangement 30 and into the down conductor 35.

In this embodiment, it will be noted that that the axle arrangement 30 is positioned some way back from the very tip of the blade, so the fin 23 includes a cut-out formation 38 so it can accommodate the shape of the blade as it pivots between its first and second positions without coming into contact with the outer surface of the blade which would affect free movement of the fin 23.

The cut-out formation 38 is defined at the proximal end or 'base' of the fin 23 and extends in the plane of the fin 23 so as to define a shape that generally matches the profile of the tip end 22 of the blade when considered in a vertical section extending along the longitudinal axis 24 of the blade 12. As can be seen in Figure 4, the cut-out formation 38 closely follows the profile of the blade 12 with a small clearance to ensure the fin 23 can pivot freely.

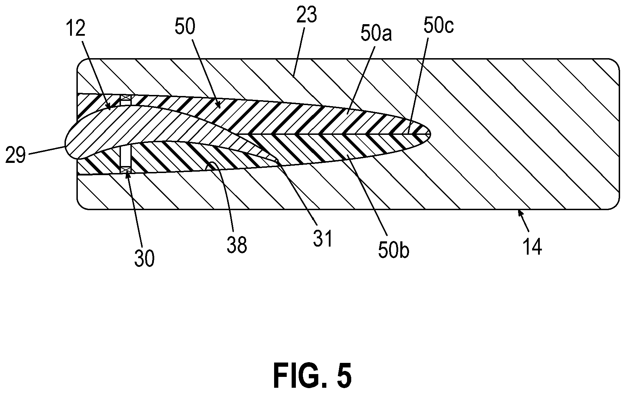

It will be appreciated that the profile of the blade 12 that is accommodated within the cut-out formation 38 varies as the fin 23 pivots between the first and second positions. In this regard, Figure 5 shows the fin 23 in the second position in which the fin 23 is perpendicular to the longitudinal axis 24 of the blade. Here, it will be noticed that the area defined by the cut-out formation 38 is significantly larger than the cross-sectional profile of the particular span-wise station at which the fin 23 is mounted. To this end, the edgewise stabilizer 14 also comprises a flexible fringe or skirt 50 that fills the gap between the exterior surface of the blade and the cut-out formation 38 of the fin 23 that prevents air flowing through the gap. The skirt 50 has a structure that allows the fin 23 to pivot with respect to the blade 12 whilst providing a substantially impervious seal against the blade to prevent airflow from passing through the gap. Currently it is envisaged that a thin rubber material would be appropriate, comprising upper and lower skirt portions 50a,50b defining a lateral split line 50c between them. Another possibility would be a fibrous fringe of bristles or the like. Other configurations are possible. Beneficially, the seal created by the skirt 50 improves the efficiency of the fin 23 when acting as a winglet. The structure of the skirt 50 should be durable in order to withstand the effects of weathering. Optionally, the skirt 50 may be removably mounted to the fin so that it can be replaced if it gets worn or damaged.

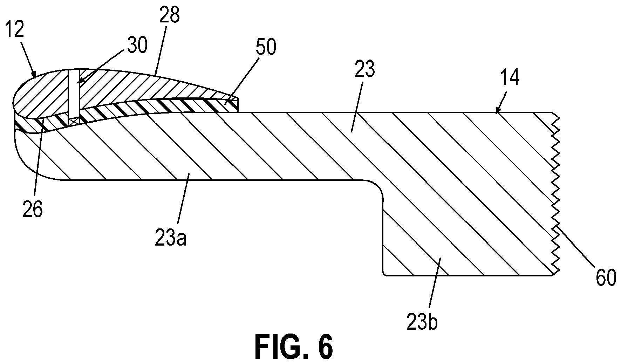

Although the edgewise stabilizer 14 in Figures 3 and 4 has been described as being rectangular in shape and extending about both the suction side 28 and pressure side 26 of the blade 12, it should be appreciated that this is just one example and that other configurations are possible. Figure 6 shows an alternative embodiment, where the same reference numerals are used to refer to features in common with previous embodiments. In Figure 6, the edgewise stabilizer 14 includes a fin 23 that is mounted to and extends over one side of the blade 12, more specifically the pressure side 26 of the blade 12. As in the previous embodiments, the fin 23 is pivotably mounted to axle arrangement 30 that allows the fin 23 to pivot between a first position during operation of the wind turbine, which position is shown in Figure 6, and a second position when the wind turbine is non-operational such that the fin 23 aligns with the longitudinal axis of the blade 12. An advantage of mounting the edgewise stabilizer 14 to the blade asymmetrically is that it allows for greater tower clearance.

Furthermore, it will be noted that in this embodiment the 23 fin has a stepped profile comprising a relatively narrow proximal section 23a which then blends into a relatively wide distal section 23b. In this configuration, the relatively wide distal section 23b provides the largest surface area of the fin 23 and is positioned radially more outward from the blade tip than the narrow proximal section 23a. The benefit of this is that the overall mass of the fin 23 can be reduced whilst retaining the majority of the edgewise damping effects of the fin.

In a similar manner to previous embodiments, the edgewise stabilizer 14 may comprise a flexible skirt 50 that fills the gap between the fin 23 and the external surface of the blade 12.

In order to reduce turbulence when the fin 23 acts as a winglet, a turbulence-reducing feature 60 may be provided on the trailing edge of the fin 23. In the embodiment in Figure 6, the trailing edge of the fin 23 is serrated, to be contrasted with the linear trailing edge in previous embodiments. Although the serrations are formed integrally with the fin 23 in this embodiment, they may also be provided by a serrated strip that it bonded or otherwise secured to the trailing edge of the fin 23.

As has been discussed above, the edgewise stabilizer 14 is configured to move between a first position 32 when the wind turbine is non-operational to a second position 34 when the blades are turning. Various methods may be used to achieve this. For example, one option is for movement of the edgewise stabilizer 14 to be linked to the pitching movement of the associated blade, for example by a control cable that connects the edgewise stabilizer 14 to one of either the hub, blade bearing, or pitch system. When the wind turbine is operational and the blade 12 has a relatively low pitch position, for example below 30 degrees, the control cable would be slack so that the edgewise stabilizer 14 is forced into the winglet position by the force of the air flowing past it.

As the rotation of the hub is slowed by pitching out of the blades, for example up to and past 60 degrees of pitch, tension is applied to the control cable which therefore begins to deploy the edgewise stabilizer 14 into the first position. The control cable may be adjustable so that tension is applied at selected pitch angles which provides control over when the edgewise stabilizer is deployed. For example the control cable may be configured to deploy the edgewise stabilizer at pitch positions only above angles selected between 40 and 80 degrees. Likewise, the control cable could be configured to allow the edgewise stabilizer 14 to pivot freely below predetermined pitch angles, for example 30 or 40 degrees. Measures could also be provided to enable the edgewise stabilizer to be fixed in the second position below predetermined pitch angles.

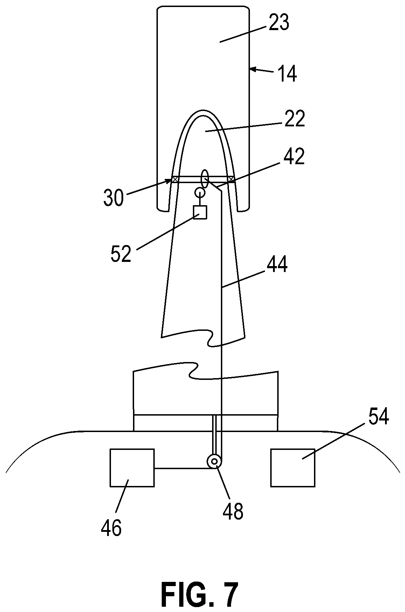

Figure 7 illustrates in schematic form one possible actuation system for the edgewise stabilizer 14 configured to move it between first and second positions. In this embodiment, the axle arrangement 30 includes a lever 42 having a distal end to which a one end of a control cable 44 is connected. Angular movement of the lever 42 causes pivoting movement of the fin 23. The control cable 44 extends down the interior volume of the blade 12 to a mounting point 46, which in this embodiment is a stationary point, for example associated with the hub.

It will be appreciated that as the blade rotates about its axis 24 relative to the hub during pitching, the relative position of the mounting point 46 will move relative to the blade which will vary the tension in the control cable 44. The control cable 44 runs through a pulley 48 mounted to point associated with the blade. Thus, as the blade 12 pitches the pulley 48 moves away from or towards the mounting point 46 which therefore varies the tension in the control cable 44. The blade pitch angle at which the edgewise stabilizer 14 is moved to the first position 32 can be configured by the length of control cable 44. In one embodiment of the invention, the edgewise stabilizer 14 is moved to the first position 32 when the pitch angle of the wind turbine blade 12 is pitched to have a pitch angle of, for example, 40 degrees. In other embodiments the edgewise stabilizer is moved to the first position 32 when the blade pitch angles are above 40, 50, 60, 70 or 80 degrees.

As an alternative actuation method, the edgewise stabilizer 14 may be rotated between the first and second positions 32, 34 by a motorised drive system. For example, referring to Figure 7, a motor 52 may be located inside the blade 12 adjacent the axle arrangement 30 and configured to rotate the axle arrangement 30 directly, thereby causing the fin 23 to change position. The motor 52 could alternatively be located within the hub where it may operate a control cable in a manner that has been described. Control of the motor 52 may be linked to a pitch system 54 of the wind turbine so precise control of the positioning of the edgewise stabilizer 14 could be provided in dependence on the pitch angle position of the blade.

The edgewise stabilizer in accordance with the embodiments of the invention is suitable for retrofitting onto existing wind turbine blades or it can be designed into blades during their manufacture. However, the aerodynamic benefits provided by the edgewise stabilizer when functioning as a winglet provide an opportunity to reduce the length of a wind turbine blade without reducing its efficiency.

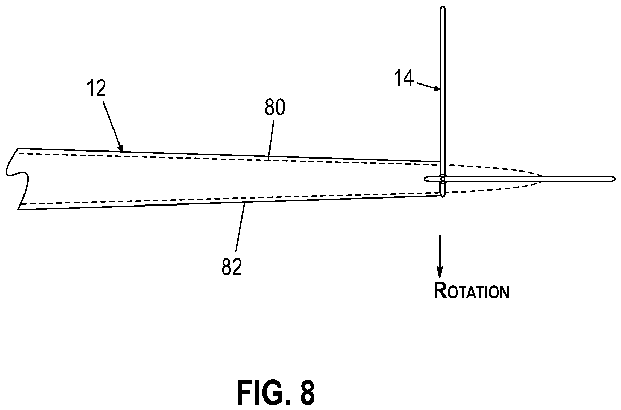

Figure 8 illustrates two blade plan views that demonstrate pictorially a potential blade design benefit afforded by the edgewise stabilizer 14. A first blade 80 denoted by dashed lines depicts a blade having an edgewise stabilizer pivotably-mounted at the tip end 22 of the blade 12 a short distance inwards from the very tip of the blade, as has been discussed in the previous embodiments. This is to be compared with the second blade 82 denoted with full lines 80 which shows an alternate blade profile having comparable performance to the first blade 80. Here, it will be noted that the edgewise stabilizer 14 of the second blade 82 is mounted at the very tip of the blade 82, which is flat instead of defining a point as in the first blade 80. Since tip losses are reduced by the effect of the edgewise stabilizer 14 acting as a winglet, this provides the potential to design the blade as having a shorter length and increased chord without sacrificing aerodynamic efficiency.

Modifications may be made to the above examples without departing from the scope of the present invention as defined in the accompanying claims.

For example, it has been discussed above that the edgewise stabilizer may be conductive so as to act as a lightning receptor for the blade and that a down conductor cable 44 would provide a route to direct current from the edgewise stabilizer 14 to a suitable lightning protection system for the blade. Benefits may be achieved by integrating the down conductor function into the control cable for actuating the edgewise stabilizer 14 between its two operating position.

Although in the above embodiments the fin 23 is pivotably mounted to the tip end of the blade, in some embodiments the fin may be otherwise movable relative to the blade, for example the fin could be configured to slide out of the blade telescopically into its stabilizing position.

In the illustrated embodiments, the edgewise stabilizer is operable to move into the first position in dependence on pitch position. For example, during an emergency stop the stabilizer will be moved into the first position as the blades are pitched into their featured position. However, the edgewise stabilizer may also be used as an aerodynamic brake to reduce rotational speeds of the wind turbine during certain conditions, for example during gusting or continued high wind speeds. This could be readily achieved by programming a control system to drive the motor to cause the edgewise stabilizer to employ when high rotational speeds are detected.

## Claims

1. A wind turbine (10) comprising:
at least one pitchable wind turbine blade (12) mounted to a hub (15), the blade having a root end (20), a tip end (22) and a longitudinal axis (24) extending between the root end and the tip end, and an aerofoil surface defined by a pressure side (26) and a suction side (28); and
a movable fin (14) mounted at the tip end of the blade (22), wherein the fin is deployed into a first position (32) in dependence on the pitch position of the blade and when the wind turbine is in a non-operational mode;
**characterised in that** in the first position (32) the fin extends in a direction substantially aligned with the longitudinal axis of the blade and is arranged in a plane which is substantially perpendicular to an edgewise axis of the blade at the tip end, such that the fin acts as an aerodynamic stabilizer to reduce the effects of edgewise vibrations on the blade (12).

2. The wind turbine of claim 1, wherein the fin (14) is movable to a second position (34) in which it acts as a winglet.

3. The wind turbine of claim 2, wherein in the second position (34) the fin (14) extends in a direction transverse to the longitudinal axis of the blade (12).

4. The wind turbine of claims 2 or 3, wherein the fin (14) is moved between the first position (32) and the second position (34) depending on the blade pitch position.

5. The wind turbine of any preceding claim, wherein the fin (14) is configured to be moved to the first position (32) by an electric motor, the operation of which is linked to a pitch system of the wind turbine.

6. The wind turbine of any one of claims 1 to 4, wherein the fin (14) is configured to be moved to the first position (32) by a cable operable by a component associated with a pitch system of the wind turbine.

7. The wind turbine of any preceding claim, wherein the fin (14) is moved to the first position when the pitch position of the blade (12) is greater than about 40°.

8. The wind turbine of any preceding claim, wherein the fin (14) is configured to pivot freely with respect to the blade (12) when the fin is not being moved to the first position (32).

9. The wind turbine of any preceding claim, wherein the fin (14) is configured to pivot freely with respect to the blade (12) when the blade pitch position is less than about 40°.

10. The wind turbine of any preceding claim, wherein the fin (14) is made at least in part of a conductive material.

11. The wind turbine of claim 10, wherein the fin (14) is electrically coupled to a lightning protection system of the blade.

12. The wind turbine of any preceding claim, wherein the fin (14) includes a turbulence reducing feature.

13. The wind turbine of any preceding claim, wherein the fin (14) extends over a part of the suction side (28) of the blade (12).

14. The wind turbine of any preceding claim, wherein the fin (14) extends over a part of the pressure side (26) of the blade (12).

15. The wind turbine of any preceding claim, wherein the fin (14) extends over at part of both the pressure (26) and suction sides (28) of the blade (12).

16. The wind turbine of any one of claims 13 to 15, wherein a gap is defined between the fin (14) and the blade (12) where the fin extends over the blade surface, and where the fin includes a flexible skirt (50) that fills at least part of the gap.

17. The wind turbine of any preceding claim, wherein the fin (14) has a length between 2% to 8% of a length of the blade (12).

18. The wind turbine of any preceding claim, wherein the fin (14) has a width between 0.5% to 3% of a length of the blade (12).

## Patentansprüche

1. Windkraftanlage (10) umfassend:
mindestens ein verstellbares Windkraftanlagenblatt (12), das an einer Nabe (15) montiert ist, wobei das Blatt ein Wurzelende (20), ein Spitzenende (22) und eine Längsachse (24), die sich zwischen dem Wurzelende und dem Spitzenende erstreckt, und eine aerodynamische Profilfläche, die durch eine Druckseite (26) und eine Saugseite (28) definiert ist, aufweist; und
eine bewegliche Finne (14), die an dem Spitzenende des Blatts (22) montiert ist, wobei die Finne in eine erste Position (32) eingesetzt wird, abhängig von der Anstellwinkelposition des Blatts und wenn die Windkraftanlage in einem Nichtbetriebsmodus ist;
**dadurch gekennzeichnet, dass** in der ersten Position (32) die Finne sich in einer Richtung im Wesentlichen mit der Längsachse des Blatts ausgerichtet erstreckt und in einer Ebene angeordnet ist, die im Wesentlichen senkrecht zu einer hochkantigen Achse des Blatts an dem Spitzenende ist, sodass die Finne als ein aerodynamischer Stabilisator agiert, um die Effekte von hochkantigen Schwingungen an dem Blatt (12) zu verringern.

2. Windkraftanlage nach Anspruch 1, wobei die Finne (14) zu einer zweiten Position (34) beweglich ist, in der sie als ein Winglet agiert.

3. Windkraftanlage nach Anspruch 2, wobei in der zweiten Position (34) die Finne (14) sich in einer Richtung quer zu der Längsachse des Blatts (12) erstreckt.

4. Windkraftanlage nach Anspruch 2 oder 3, wobei die Finne (14) zwischen der ersten Position (32) und der zweiten Position (34) abhängig von der Blattanstellwinkelposition bewegt wird.

5. Windkraftanlage nach einem der vorstehenden Ansprüche, wobei die Finne (14) konfiguriert ist durch einen Elektromotor zu der ersten Position (32) bewegt zu werden, dessen Betrieb mit einem Anstellwinkelsystem der Windkraftanlage verbunden ist.

6. Windkraftanlage nach einem der Ansprüche 1 bis 4, wobei die Finne (14) konfiguriert ist, durch ein Kabel zu der ersten Position (32) bewegt zu werden, das von einer Komponente betrieben werden kann, die mit einem Anstellwinkelsystem der Windkraftanlage verknüpft ist.

7. Windkraftanlage nach einem der vorstehenden Ansprüche, wobei die Finne (14) zu der ersten Position bewegt wird, wenn die Anstellwinkelposition des Blatts (12) größer als etwa 40° ist.

8. Windkraftanlage nach einem der vorstehenden Ansprüche, wobei die Finne (14) konfiguriert ist, in Bezug auf das Blatt (12) frei zu schwenken, wenn die Finne nicht zu der ersten Position (32) bewegt wird.

9. Windkraftanlage nach einem der vorstehenden Ansprüche, wobei die Finne (14) konfiguriert ist, in Bezug auf das Blatt (12) frei zu schwenken, wenn die Blattanstellwinkelposition weniger als etwa 40° ist.

10. Windkraftanlage nach einem der vorstehenden Ansprüche, wobei die Finne (14) mindestens zum Teil aus einem leitfähigen Material hergestellt ist.

11. Windkraftanlage nach Anspruch 10, wobei die Finne (14) elektrisch an ein Blitzschutzsystem des Blatts gekoppelt ist.

12. Windkraftanlage nach einem der vorstehenden Ansprüche, wobei die Finne (14) ein Turbulenzverringerungsmerkmal beinhaltet.

13. Windkraftanlage nach einem der vorstehenden Ansprüche, wobei die Finne (14) sich über einen Teil der Saugseite (28) des Blatts (12) erstreckt.

14. Windraftanlage nach einem der vorstehenden Ansprüche, wobei die Finne (14) sich über einen Teil der Druckseite (26) des Blatts (12) erstreckt.

15. Windkraftanlage nach einem der vorstehenden Ansprüche, wobei die Finne (14) sich zum Teil über sowohl die Druck- (26) als auch Saugseite (28) des Blatts (12) erstreckt.

16. Windkraftanlage nach einem der Ansprüche 13 bis 15, wobei ein Spalt zwischen der Finne (14) und dem Blatt (12) definiert ist, wo die Finne sich über die Blattoberfläche erstreckt und wo die Finne eine flexible Schürze (50) beinhaltet, die mindestens Teil des Spalts füllt.

17. Windkraftanlage nach einem der vorstehenden Ansprüche, wobei die Finne (14) eine Länge von 2% bis 8% einer Länge des Blatts (12) aufweist.

18. Windkraftanlage nach einem der vorstehenden Ansprüche, wobei die Finne (14) eine Breite von 0,5% bis 3% einer Länge das Blatts (12) aufweist.

## Revendications

1. Éolienne (10) comprenant :
au moins une pale d'éolienne inclinable (12) montée sur un moyeu (15), la pale ayant une extrémité d'emplanture (20), une extrémité de pale (22) et un axe longitudinal (24) s'étendant entre l'extrémité d'emplanture et l'extrémité de pale, et une surface de profil d'aile définie par un intrados (26) et un extrados (28) ; et
une ailette mobile (14) montée au niveau de l'extrémité de pale de la pale (22), dans laquelle l'ailette est déployée dans une première position (32) en fonction de la position de calage de la pale et lorsque l'éolienne est dans un mode non opérationnel ;
**caractérisée en ce que** dans la première position (32), l'ailette s'étend dans une direction sensiblement alignée avec l'axe longitudinal de la pale et est agencée dans un plan qui est sensiblement perpendiculaire à un axe dans la direction longitudinale du profil de la pale au niveau de l'extrémité de pale, de telle sorte que l'ailette sert de stabilisateur aérodynamique pour réduire les effets de vibrations dans la direction longitudinale du profil sur la pale (12).

2. Éolienne selon la revendication 1, dans laquelle l'ailette (14) est mobile vers une seconde position (34) dans laquelle elle sert de winglet.

3. Éolienne selon la revendication 2, dans laquelle dans la seconde position (34), l'ailette (14) s'étend dans une direction transversale par rapport à l'axe longitudinal de la pale (12).

4. Éolienne selon les revendications 2 ou 3, dans laquelle l'ailette (14) est déplacée entre la première position (32) et la seconde position (34) en fonction de la position de calage de pale.

5. Éolienne selon une quelconque revendication précédente, dans laquelle l'ailette (14) est configurée pour être déplacée vers la première position (32) par un moteur électrique, dont le fonctionnement est lié à un système de calage de l'éolienne.

6. Éolienne selon l'une quelconque des revendications 1 à 4, dans laquelle l'ailette (14) est configurée pour être déplacée vers la première position (32) par un câble utilisable par un composant associé à un système de calage de l'éolienne.

7. Éolienne selon une quelconque revendication précédente, dans laquelle l'ailette (14) est déplacée vers la première position lorsque la position de calage de la pale (12) est supérieure à environ 40°.

8. Éolienne selon une quelconque revendication précédente, dans laquelle l'ailette (14) est configurée pour pivoter librement par rapport à la pale (12) lorsque l'ailette n'est pas déplacée vers la première position (32).

9. Éolienne selon une quelconque revendication précédente, dans laquelle l'ailette (14) est configurée pour pivoter librement par rapport à la pale (12) lorsque la position de calage de la pale est inférieure à environ 40°.

10. Éolienne selon une quelconque revendication précédente, dans laquelle l'ailette (14) est composée au moins en partie d'un matériau conducteur.

11. Éolienne selon la revendication 10, dans laquelle l'ailette (14) est couplée électriquement à un système de protection contre la foudre de la pale.

12. Éolienne selon une quelconque revendication précédente, dans laquelle l'ailette (14) inclut un dispositif réducteur de turbulences.

13. Éolienne selon une quelconque revendication précédente, dans laquelle l'ailette (14) s'étend au-dessus d'une partie de l'extrados (28) de la pale (12).

14. Éolienne selon une quelconque revendication précédente, dans laquelle l'ailette (14) s'étend au-dessus d'une partie de l'intrados (26) de la pale (12).

15. Éolienne selon une quelconque revendication précédente, dans laquelle l'ailette (14) s'étend au-dessus d'une partie à la fois de l'intrados (26) et de l'extrados (28) de la pale (12).

16. Éolienne selon l'une quelconque des revendications 13 à 15, dans laquelle un espace est défini entre l'ailette (14) et la pale (12) à l'endroit où l'ailette s'étend au-dessus de la surface de la pale, et à l'endroit où l'ailette inclut une jupe flexible (50) qui remplit au moins une partie de l'espace.

17. Éolienne selon une quelconque revendication précédente, dans laquelle l'ailette (14) a une longueur comprise entre 2 % et 8 % d'une longueur de la pale (12).

18. Éolienne selon une quelconque revendication précédente, dans laquelle l'ailette (14) a une largeur comprise entre 0,5 % et 3 % d'une longueur de la pale (12).
